# EUROPÄISCHE PATENTANMELDUNG

(11) **EP 4 620 792 A1**
(43) Veröffentlichungstag der Anmeldung: **24.09.2025**
(21) Anmeldenummer: 25160166.2
(22) Anmeldetag: 26.02.2025
(51) Int. Cl.: B62J 17/10, B62J 45/415

(54) **NEIGEFAHRZEUG**

(30) Priorität: 21.03.2024 DE 102024108119
(71) Anmelder: Bayerische Motoren Werke Aktiengesellschaft, 80809 München (DE)
(72) Erfinder: Schmitt, Simon, 94572 Schöfweg (DE)

(57) **Zusammenfassung**

Neigefahrzeug, insbesondere Motorrad, umfassend zur Seite hin orientierte Öffnungen, welche mit einer Einrichtung verbunden sind, die ausgelegt ist, an der oder den Öffnungen einen Sog zu erzeugen, wodurch, insbesondere bei Schräglage, der Abtrieb erhöht werden kann.

## Beschreibung

Die vorliegende Erfindung betrifft ein Neigefahrzeug, insbesondere ein Motorrad.

Bei modernen Motorrädern, insbesondere bei Sportmotorrädern, spielt die Aerodynamik eine immer größere Rolle. Insbesondere das Erzeugen von Abtrieb steht im Fokus. So offenbart beispielsweise die DE 10 2021 132 110 A1 ein Kraftrad, umfassend einen Seitenverkleidungsabschnitt und mindestens ein bezüglich einer Mittellängsebene des Kraftrads seitwärts vom Seitenverkleidungsabschnitt abragendes Strömungsleitelement, welches dazu angeordnet ist, bei Anströmung mit Fahrtwind eine Abtriebskraft zu erzeugen. Derartige Strömungsleitelemente, auch Winglets genannt, haben sich als sehr effektiv herausgestellt, insbesondere bei Geradeausfahrt.

Es ist eine Aufgabe der vorliegenden Erfindung, ein Neigefahrzeug anzugeben, welches auch bei Schräglage einen hohen Abtrieb erzeugen kann, wodurch höhere Kurvengeschwindigkeiten möglich sind.

Diese Aufgabe wird durch ein Neigefahrzeug gemäß Anspruch 1 gelöst. Weitere Vorteile und Merkmale ergeben sich aus den Unteransprüchen sowie der Beschreibung und den beigefügten Figuren.

Erfindungsgemäß umfasst ein (Neige-)Fahrzeug, insbesondere ein Motorrad, zur Seite hin orientierte Öffnungen, welche mit zumindest einer Einrichtung verbunden sind, die ausgelegt ist, an der oder den Öffnungen einen Sog oder eine Strömung zu erzeugen, wodurch, insbesondere bei Schräglage, der Abtrieb erhöht werden kann. Über den Sog oder die Strömung kann der Druck seitlich am Fahrzeug reduziert werden. Je nach Stärke des Sogs oder der Strömung kann sogar ein Unterdruck erzeugt werden. Das Fahrzeug weist eine Mittellängsebene auf. Diese ist entlang einer Fahrtrichtung sowie entlang einer Hochachse des Kraftrads orientiert. Seitlich davon ist jeweils die zumindest eine Öffnung ausgebildet oder angeordnet. Insbesondere bei Schräglage kann so zusätzlicher Abtrieb erzeugt werden, indem beispielsweise unterhalb des Motorrads ein niedrigerer Druck herrscht als oberhalb des Motorrads, mit anderen Worten auf der der Fahrbahn zugewandten Seite ein niedrigerer Druck als auf der der Fahrbahn abgewandten Seite. Die "Anpresskraft" wird also erhöht. Durch die so generierte höhere Reifenaufstandskraft erhöht sich die Seitenkraft, welche der Reifen übertragen kann und damit die mögliche, erzielbare Kurvengeschwindigkeit.

Gemäß einer Ausführungsform ist die zumindest eine Einrichtung eine Strömungserzeugungseinrichtung. Eine Strömungserzeugungseinrichtung kann ein Gebläse, oder eine Pumpe oder ein Lüfter sein. Gemäß einer Ausführungsform ist die Strömungserzeugungseinrichtung elektrisch angetrieben. Eine typische Leistungsaufnahme, um einen spürbaren Effekt zu erzielen, liegt, je nach Anwendungsfall beispielsweise im Bereich von etwa 200 bis 300 Watt, gegebenenfalls auch höher.

Die Einrichtung kann auch eine Unterdruckerzeugungseinrichtung sein, welche in dem Fahrzeug, bevorzugt ohnehin, vorhanden ist. Gemäß einer Ausführungsform wird beispielsweise der Luftpfad eines Verbrennungsmotors, insbesondere dessen Einlasssystem, verwendet. Im Saugrohr nach der Drosselklappe liegt, abhängig von der Drosselklappenstellung, temporär ein Unterdruck an, welcher in geeigneter Weise an die Öffnung geführt werden kann.

Gemäß einer Ausführungsform ist die Öffnung unmittelbar an der zumindest einen Einrichtung ausgebildet. Alternativ ist eine Einrichtung fluidleitend mit zumindest einer Öffnung verbunden. Diese ist in diesem Fall beabstandet zur Einrichtung positioniert. Dies ermöglicht eine größere Flexibilität, da insbesondere die zumindest eine Einrichtung packageoptimal positioniert werden kann.

Gemäß einer Ausführungsform ist zumindest eine Öffnung in einem Verkleidungsbauteil des Neigefahrzeugs ausgebildet. Gemäß einer Ausführungsform ist die Strömungserzeugungseinrichtung beispielsweise direkt im Bereich der Verkleidung ausgebildet oder angeordnet. Alternativ weist das Kraftrad eine Strömungserzeugungseinrichtung auf, welche über einen oder mehrere Kanäle mit einer oder mehreren Öffnungen verbunden ist.

Auf jeder Seite des Fahrzeugs können mehrere Öffnungen ausgebildet sein. Gemäß einer Ausführungsform ist zumindest eine Öffnung an einer Unterseite des Neigefahrzeugs ausgebildet. Damit kann auch bei Geradeausfahrt der Abtrieb erhöht werden.

Gemäß einer Ausführungsform ist eine Einströmrichtung in zumindest eine Öffnung veränderbar ausgebildet. Gemäß einer Ausführungsform weist zumindest eine Öffnung einen verstellbaren Öffnungsquerschnitt auf. Insbesondere kann also der Öffnungsquerschnitt beispielsweise hinsichtlich seines Durchmessers und/oder hinsichtlich seiner Orientierung veränderbar ausgebildet sein. Damit kann, abhängig von der Schräglage, ein jeweils optimaler Effekt erzielt werden. Gemäß einer Ausführungsform ist die Öffnung, wenn sie nicht benötigt wird, vollständig verschließbar. Möglich ist beispielsweise das Vorsehen eines Lamellenverschlusses. Die Öffnung ist hierbei beispielsweise über eine Vielzahl von Lamellen, welche drehbar oder verschiebbar angeordnet sind, vollständig verschließbar. Ein negativer Effekt der Öffnungen auf die Aerodynamik, insbesondere beispielsweise bei Geradeausfahrt, kann damit vermieden werden.

Zweckmäßigerweise umfasst das Neigefahrzeug eine Steuereinrichtung, welche ausgelegt ist, die Einrichtung fahrsituationsabhängig zu betreiben. Die Steuereinrichtung ist insbesondere ausgelegt, die Einrichtung nur zu betreiben, wenn sich das Fahrzeug in Schräglage befindet. Der Sog muss jeweils nur auf der dem Boden zugewandten Seite erzeugt werden. Entsprechend muss die Einrichtung oder müssen die Einrichtungen nicht permanent betrieben werden, sondern nur abhängig von der jeweiligen Fahrsituation. Zweckmäßigerweise ist die zumindest eine Einrichtung ausgelegt, mit unterschiedlicher Leistung betrieben zu werden. Damit kann die Sogwirkung oder Saugwirkung bedarfsgerecht angepasst werden.

Gemäß einer Ausführungsform umfasst die Steuereinrichtung einen Schräglagensensor oder steht mit einem derartigen Schräglagensensor in Wirkverbindung. Zweckmäßigerweise kann die Steuereinrichtung darüber die Information erhalten, ob bzw. wie weit das Fahrzeug in Schräglage ist und entsprechend die Einrichtung betreiben.

Durch die beschleunigte Luft zwischen Boden und Fahrzeug wird seitlich am Fahrzeug ein Druck, ggf. auch ein Unterdruck, generiert, der das Fahrzeug in Richtung Boden drückt. Genauer gesagt wird der Abtrieb über den Druckunterschied erzeugt, welcher auf das Fahrzeug wirkt, wenn auf der einen Seite der Druck höher ist als auf der anderen Seite. Über die Strömung oder den Sog kann mit Vorteil erreicht werden, dass der Druck auf der der Fahrbahn zugewandten Seite geringer ist als auf der gegenüberliegenden Seite. Oftmals wird dieser Effekt bereits über eine entsprechend gestaltet Verkleidung erreicht. Über den Sog oder die Strömung kann der Effekt aber nochmals verstärkt werden. Der Effekt ist typischerweise umso größer, je näher die Verkleidung am Boden ist und je stärker die Einrichtung Luft ansaugt.

Wie bereits erwähnt, kann es vorteilhaft sein, die Sogwirkung oder Saugwirkung an mehreren Stellen je Seite des Fahrzeugs vorzusehen. Die genaue Positionierung ist dabei einzelfallabhängig zu ermitteln.

Die angesaugte Luft wird beispielsweise nach hinten in Richtung Hinterrad oder auf der jeweils gegenüberliegenden Seite (dort, wo gerade kein Sog erzeugt wird) wieder ausgestoßen oder abgeleitet. Entsprechend ist die Einrichtung auch mit einem oder mehrere (Luft-)Auslässen verbunden.

Das Fahrzeug ist bevorzugt ein ein- oder mehrspuriges Neigefahrzeug, wie ein Roller oder insbesondere ein (Sport-) Motorrad, wobei auch LMW-Fahrzeuge (Leaning Multi Wheel) mit umfasst sein sollen.

Weitere Vorteile und Merkmale ergeben sich aus der nachfolgenden Beschreibung einer Ausführungsform eines Fahrzeugs mit Bezug auf die beigefügten Figuren.

Es zeigen:
- Fig. 1:: eine Frontalansicht einer Ausführungsform eines Neigefahrzeugs in Schräglage;
- Fig. 2:: eine Ausführungsform einer Einrichtung zum Erzeugen einer Strömung.

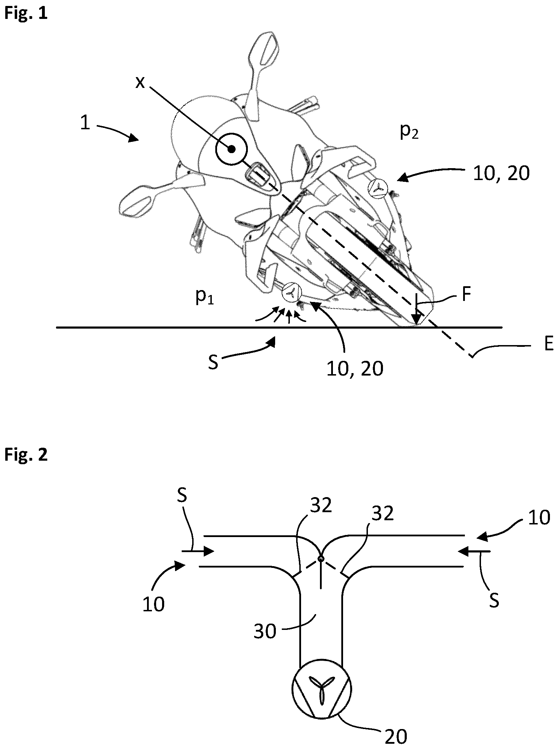

**Fig. 1** zeigt in einer Frontalansicht ein Fahrzeug 1 in Schräglage. Bezugszeichen x skizziert eine Fahrtrichtung. Das Fahrzeug 1 weist eine Mittellängsebene E auf, welche sich entlang einer Hochachse des Fahrzeugs 1 sowie entlang der Fahrtrichtung x erstreckt. Seitlich davon ist jeweils eine Öffnung 10 angeordnet oder ausgebildet. Direkt im Bereich der Öffnungen 10 sind bei dieser Ausführungsform jeweils Einrichtungen 20 angeordnet. Bei diesen Einrichtungen 20 handelt es sich beispielsweise um Strömungserzeugungseinrichtungen, wie um ein Gebläse oder um einen Lüfter. Zu erkennen ist, dass vorliegend die rechte Einrichtung 20 einen Sog oder eine Strömung S erzeugt, welche in diesem Bereich einen Druck p₁ erzeugt, welcher beispielsweise kleiner als ein Druck p₂ auf der gegenüberliegenden Seite ist. Damit kann die Normalkraft F auf den oder die Reifen erhöht werden, was wiederum zu einer Erhöhung der möglichen, übertragbaren Reifenseitenkraft und somit zu einer höheren möglichen Kurvengeschwindigkeit führt. Der so erzeugte Luftstrom kann beispielsweise innerhalb des Fahrzeugs in geeigneter Weise nach hinten oder auf die gegenüberliegende Siete abgeführt werden. Dies ist vorliegend nicht dargestellt.

**Fig. 2** zeigt eine schematisch dargestellte Strömungserzeugungseinrichtung 20, beispielsweise einen Lüfter, welcher über einen Kanal 30 mit zwei Öffnungen 10 fluidleitend verbunden ist. Dargestellt ist weiter, dass in dem Kanal 30 oder auch Kanalsystem 30, da dieser mehrere Einzelkanäle umfasst, eine schwenkbare Klappe 32 angeordnet ist. Darüber ist es beispielsweise möglich, nur an einer Öffnung 10 einen Sog oder eine Strömung S zu erzeugen. Eine derartige Einrichtung 20 kann an einer günstigen Stelle im Fahrzeug positioniert werden. Über das Kanalsystem 30 können dann die ihrerseits optimal positionierten Öffnungen 10 versorgt werden. Es ist auch möglich ein Kanalsystem mit mehreren Einrichtungen 20 zu betreiben. Die bestmögliche Ausgestaltung ist fahrzeugabhängig zu ermitteln.

### Bezugszeichenliste

- 1: Fahrzeug, Kraftrad
- 10: Öffnung
- 20: (Strömungserzeugungs-)Einrichtung
- 30: Kanal(-System)
- 32: Klappe
- S: Strömung, Sog
- x: Fahrtrichtung
- p₁: Druck
- p₂: Druck
- F: Normalkraft
- E: Mittellängsebene

## Patentansprüche

1. Neigefahrzeug, insbesondere Motorrad,
umfassend zur Seite hin orientierte Öffnungen (10), welche mit zumindest einer Einrichtung (20) verbunden sind, die ausgelegt ist, an der oder den Öffnungen (10) einen Sog (S) zu erzeugen, wodurch, insbesondere bei Schräglage, der Abtrieb erhöht werden kann.

2. Neigefahrzeug gemäß Anspruch 1,
wobei die zumindest eine Einrichtung (20) eine Strömungserzeugungseinrichtung, insbesondere ein Gebläse oder eine Pumpe ist.

3. Neigefahrzeug nach Anspruch 1 oder 2,
wobei die Öffnung (10) unmittelbar an der Einrichtung (20) ausgebildet ist oder wobei die Einrichtung 20) fluidleitend mit zumindest einer Öffnung (10) verbunden ist, welche beabstandet zur Einrichtung (20) positioniert ist.

4. Neigefahrzeug nach einem der vorhergehenden Ansprüche,
wobei zumindest eine Öffnung (10) in einem Verkleidungsbauteil des Neigefahrzeugs ausgebildet ist.

5. Neigefahrzeug nach einem der vorhergehenden Ansprüche,
wobei zumindest eine Öffnung (10) an einer Unterseite des Neigefahrzeugs ausgebildet ist.

6. Neigefahrzeug nach einem der vorhergehenden Ansprüche,
wobei eine Einströmrichtung in zumindest eine Öffnung (10) veränderbar ausgebildet ist.

7. Neigefahrzeug nach einem der vorhergehenden Ansprüche,
wobei zumindest eine Öffnung (10) einen verstellbaren Öffnungsquerschnitt aufweist.

8. Neigefahrzeug nach einem der vorhergehenden Ansprüche,
wobei der Öffnungsquerschnitt hinsichtlich seines Durchmessers und/oder hinsichtlich seiner Orientierung veränderbar ausgebildet ist.

9. Neigefahrzeug nach einem der vorhergehenden Ansprüche, umfassend eine Steuereinrichtung, welche ausgelegt ist, die Einrichtung (20) fahrsituationsabhängig zu betreiben.

10. Neigefahrzeug nach einem der vorhergehenden Ansprüche,
wobei die Steuereinrichtung mit einem Schräglagensensor in Wirkverbindung steht.
